# EUROPÄISCHE PATENTSCHRIFT

(11) **EP 0 548 014 B1**
(45) Veröffentlichungstag und Bekanntmachung des Hinweises auf die Patenterteilung: **12.03.1997**
(21) Anmeldenummer: 92810966.9
(22) Anmeldetag: 08.12.1992
(51) Int. Cl.: C09B 67/22

(54) **Farbstoffmischungen und deren Verwendung**
Dye mixtures and their utilization
Mélanges de colorants et leur utilisation

(30) Priorität: 17.12.1991 CH 3720/91
(43) Veröffentlichungstag der Anmeldung: 23.06.1993
(73) Patentinhaber: Ciba Specialty Chemicals Holding Inc., 4057 Basel (CH)
(72) Erfinder: Schaulin, Rudolf, Dr., CH-4125 Riehen (CH); Lauk, Urs, Dr., CH-8047 Zürich (CH)

(56) Entgegenhaltungen:
- CH-A- 662 580
- DE-A- 2 748 975

## Beschreibung

Die vorliegende Erfindung betrifft neue Farbstoffmischungen und deren Verwendung zum Färben und Bedrucken von Fasermaterialien, insbesondere von textilen Fasermaterialien.

Die der vorliegenden Erfindung zugrunde liegende Aufgabe war es, Farbstoffmischungen zu finden, welche zum Färben von stickstoffhaltigen und hydroxygruppenhaltigen Faserrnaterialien, insbesondere von cellulosischen Fasermaterialien, geeignet sind, gute Echtheitseigenschaften aufweisen und hochtemperaturstabil sind.

Es wurde nun gefunden, dass die Farbstoffmischung der Farbstoffe der Formeln (1) und (2) diesen Anforderungen genügt.

Gegenstand der vorliegenden Erfindung ist somit eine Farbstoffmischung, welche dadurch gekennzeichnet ist, dass sie mindestens einen Farbstoff der Formel 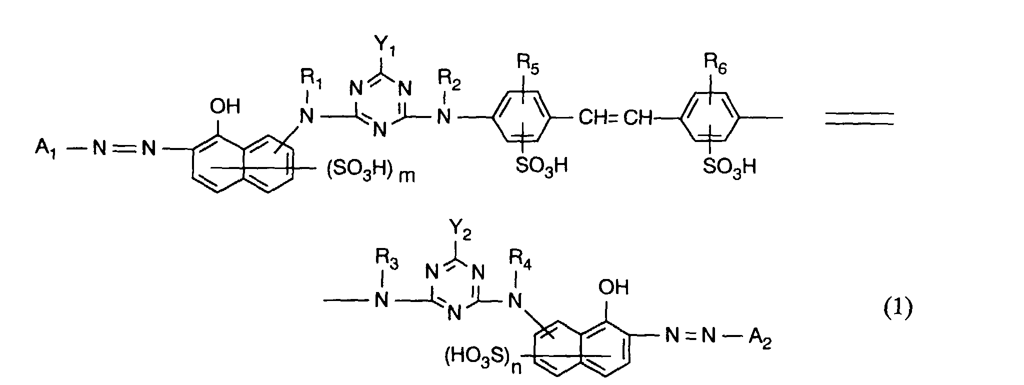 und mindestens einen Farbstoff der Formel 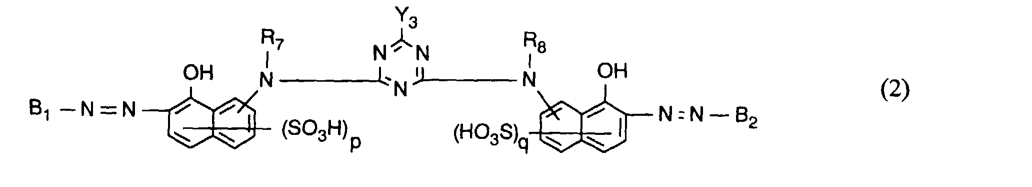 enthält, worin A₁, A₂, B₁ und B₂ unabhängig voneinander gegebenenfalls substituiertes Phenyl oder Naphthyl, R₁, R₂, R₃, R₄, R₇ und R₈ unabhängig voneinander Wasserstoff oder gegebenenfalls substituiertes C₁-C₈-Alkyl, R₅ und R₆ unabhängig voneinander Wasserstoff, gegebenenfalls substituiertes C₁-C₈-Alkyl, oder C₁-C₈-Alkoxy, Halogen, Hydroxy, Carboxy oder Sulfo, Y₁ und Y₂ Morpholino, Y₃ Halogen, Amino, gegebenenfalls im Alkylteil substituiertes N-Mono- oder N,N-Di-C₁-C₄-Alkylamino oder Morpholino ist und m, n, p und q unabhängig voneinander die Zahl 1 oder 2 bedeuten.

Aus der DE-A-2,748,975 sind Einzelkomponenten bekannt, welche sich von den Verbindungen der Formel (1) hinsichtlich der Reste Y₁ und Y₂ unterscheiden.

Verbindungen der Formel (2) sind als Einzelkomponenten aus der CH-A-662,580 bekannt.

Als Phenyl oder Naphthyl kommen für A₁ und A₂ in Formel (1) und für B₁ und B₂ in Formel (2) unsubstituiertes Phenyl oder Naphthyl, sowie z.B. durch C₁-C₄-Alkyl, wie Methyl, Äthyl, Propyl, Isopropyl, Butyl, sek.-Butyl, tert.-Butyl oder Isobutyl, insbesondere Methyl, oder C₁-C₄-Alkoxy, wie beispielsweise Methoxy, Äthoxy, Propoxy, Isopropoxy, Butoxy oder Isobutoxy, insbesondere Methoxy, oder Halogen, Hydroxy, Carboxy oder Sulfo substituiertes Phenyl oder Naphthyl in Betracht. Vorzugsweise sind A₁, A₂, B₁ und B₂ gegebenenfalls substituiertes Phenyl.

Als C₁-C₈-Alkyl kommt für R₁, R₂, R₃, R₄, R₅ und R₆ in Formel (1) und für R₇ und R₈ in Formel (2) insbesondere C₁-C₄-Alkyl, wie Methyl, Äthyl, Propyl, Isopropyl, Butyl, sek.-Butyl, tert.-Butyl oder Isobutyl, insbesondere Methyl, in Betracht. Die genannten Reste können beispielsweise durch Hydroxy, C₁-C₄-Alkoxy, Halogen oder Sulfo substituiert sein.

Als C₁-C₈-Alkoxy kommt für R₅ und R₆ in Formel (1) insbesondere C₁-C₄-Alkoxy, wie beispielsweise Methoxy, Äthoxy, Propoxy, Isopropoxy, Butoxy oder Isobutoxy, insbesondere Methoxy, in Betracht.

Als Halogen kommt für R₅, und R₆, in Formel (1) und für Y₃ in Formel (2) z.B. Fluor oder Chlor, insbesondere Chlor, in Betracht.

Y₃ in Formel (2) als N-Mono- oder
N,N-Di-C₁-C₄-Alkylamino können sowohl die unsubstituierten wie auch die im Alkylteil beispielsweise durch Hydroxy substituierten Reste sein. Als Beispiele seien N-β-Hydroxyäthylamino und N,N-Di-β-hydroxäthylamino genannt.

Als Farbstoffe der Formel (1) sind Farbstoffe bevorzugt, worin
- A₁ und A₂ gegebenenfalls durch C₁-C₄-Alkyl, C₁-C₄-Alkoxy, Halogen, Hydroxy, Carboxy oder Sulfo, insbesondere gegebenenfalls durch C₁-C₄-Alkoxy oder Sulfo, substituiertes Phenyl sind; vorzugsweise sind A₁ und A₂ unsubstituiertes Phenyl;
- R₁, R₂, R₃ und R₄ Wasserstoff oder C₁ -C₄-Alkyl, insbesondere Wasserstoff, sind;
- R₅ und R₆ Wasserstoff, C₁-C₄-Alkyl, C₁-C₄-Alkoxy oder Halogen, insbesondere Wasserstoff, sind;
- Y₁ und Y₂ Morpholino sind;
- m und n je die Zahl 2 bedeuten.

Besonders bevorzugt als Farbstoffe der Formel (1) sind Farbstoffe der Formel 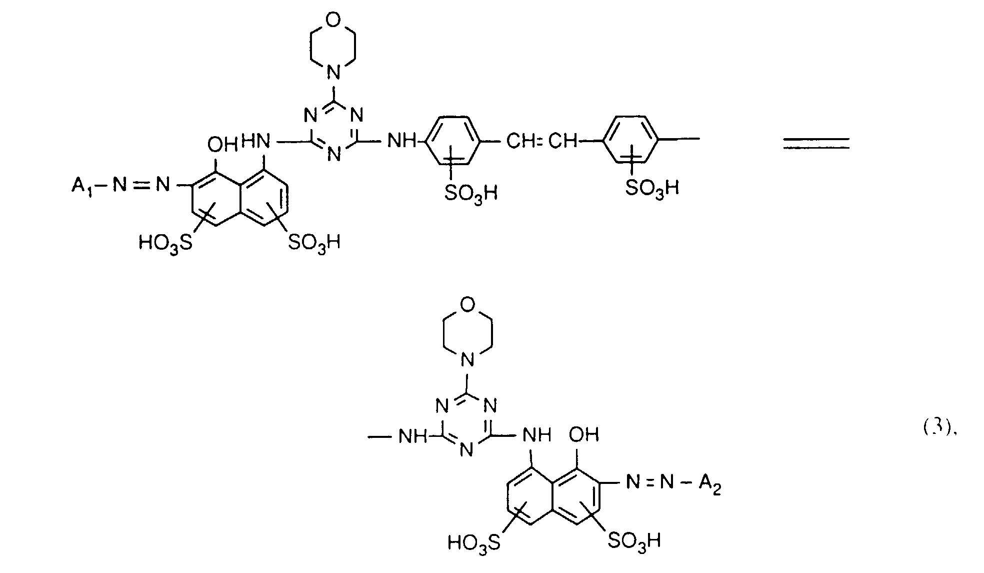 worin A₁ und A₂ die zuvor angegebenen Bedeutungen und Bevorzugungen haben.

Ganz besonders bevorzugt als Farbstoff der Formel (1) ist der Farbstoff der Formel

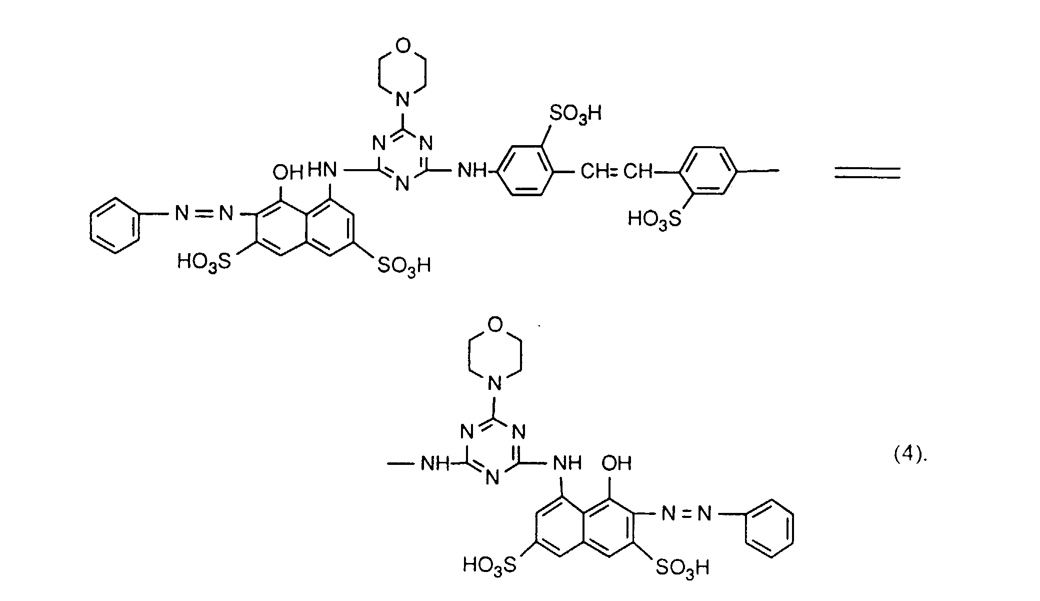

Als Farbstoffe der Formel (2) sind Farbstoffe bevorzugt, worin
- B₁ und B₂ gegebenenfalls durch C₁-C₄-Alkyl, C₁-C₄-Alkoxy, Halogen, Hydroxy, Carboxy oder Sulfo, insbesondere gegebenenfalls durch C₁-C₄-Alkoxy oder Sulfo, substituiertes Phenyl sind;
- R₇ und R₈ Wasserstoff oder C₁-C₄-Alkyl, insbesondere Wasserstoff, sind;
- Y₃ Morpholino ist;
- p und q je die Zahl 1 bedeuten.

Besonders bevorzugt als Farbstoffe der Formel (2) sind Farbstoffe der Formel 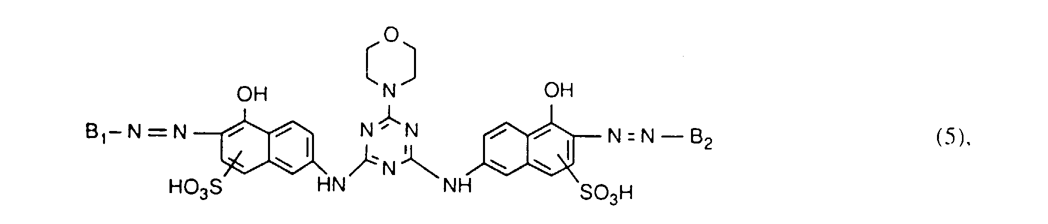 worin B₁ und B₂ die zuvor genannten Bedeutungen und Bevorzugungen.

Ganz besonders bevorzugt als Farbstoff der Formel (2) ist der Farbstoff der Formel

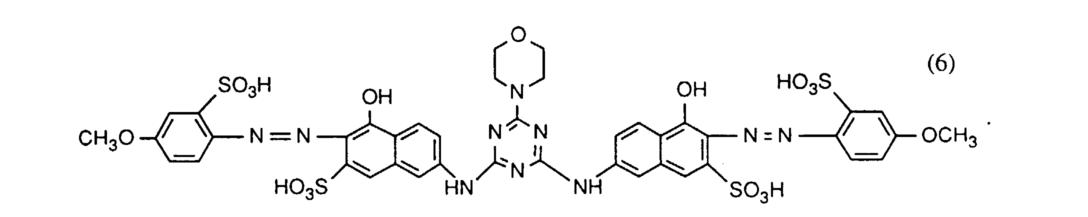

Besonders bevorzugt sind Farbstoffmischungen, worin A₁ und A₂ im Farbstoff der Formel (1) und B₁ und B₂ im Farbstoff der Formel (2) gegebenenfalls durch C₁-C₄-Alkyl, C₁-C₄-Alkoxy, Halogen, Hydroxy, Carboxy oder Sulfo, insbesondere gegebenenfalls durch C₁-C₄-Alkoxy oder Sulfo, substituiertes Phenyl sind.

Ebenfalls besonders bevorzugt sind Farbstoffmischungen, worin R₁, R₂, R₃ und R₄ im Farbstoff der Formel (1) und R₇ und R₈ im Farbstoff der Formel (2) Wasserstoff oder C₁-C₄-Alkyl, insbesondere Wasserstoff, sind.

Besonders bevorzugt sind ferner Farbstoffmischungen, worin Y₁ und Y₂ im Farbstoff der Formel (1) und Y₃ im Farbstoff der Formel (2) Morpholino sind.

Ganz besonders bevorzugt sind Farbstoffmischungen, die einen Farbstoff der Formel (1) und einen Farbstoff der Formel (2) enthalten, worin A₁, A₂, B₁ und B₂ gegebenenfalls durch C₁-C₄-Alkyl, C₁-C₄-Alkoxy, Halogen, Hydroxy, Carboxy oder Sulfo substituiertes Phenyl, R₁, R₂, R₃, R₄, R₅, R₆, R₇ und R₈ Wasserstoff, Y₁, Y₂ und Y₃ Morpholino, m und n je die Zahl 2 und p und q je die Zahl 1 bedeuten.

Besonders wichtig sind Farbstoffmischungen der Farbstoffe der Formeln (3) und (5), wobei A₁, A₂, B₁ und B₂ die unter den Formeln (3) und (5) angegebenen Bedeutungen haben.

Ganz besonders wichtig sind Farbstoffmischungen, welche als Farbstoff der Formel (1) einen Farbstoff der Formel (4) und als Farbstoff der Formel (2) einen Farbstoff der Formel (6) enthalten.

Von besonderem Interesse sind Farbstoffmischungen, worin das Verhältnis der Farbstoffe der Formeln (1) und (2) 95:5 bis 5:95, insbesondere 80:20 bis 20:80, vorzugsweise 60:40 bis 40:60 ist.

Die Farbstoffe der Formeln (1) und (2) der erfindungsgemässen Farbstoffmischungen liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffmischungen können durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen durch Zerstäubungstrocknung der wässrigen Farbstoffmischungen hergestellt werden.

Die Farbstoffe der Formeln (1) und (2) sind bekannt oder können in Analogie zu bekannten Verfahren erhalten werden.

Bezüglich ihrer färberischen Eigenschaften können die erfindungsgemässen Farbstoffmischungen als Mischungen von direktziehenden oder Direktfarbstoffen (C.I. direct dyes) bezeichnet werden.

Ein weiterer Gegenstand der Erfindung ist ein Verfahren zum Färben oder Bedrucken von stickstoffhaltigen und insbesondere hydroxylgruppenhaltigen Fasermaterialien, wie z.B. cellulosischen Fasermaterialien, unter Verwendung der erfindungsgemässen Farbstoffmischungen.

Die erfindungsgemässen Farbstoffmischungen eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

So können Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern gefärbt werden.

Die textilen Fasermaterialien können in den verschiedensten Verarbeitungszuständen vorliegen, wie z.B. als Faser, Garn, Gewebe oder Gewirke. Neben den textilen Substraten können auch Leder und Papier mit den erfindungsgemässen Farbstoffmischungen gefärbt werden.

Man erhält egale Färbungen in roten Farbtönen mit brillanter Nuance, mit guten Allgemeinechtheiten, insbesondere guten Reib-, Nass-, Nassreib-, Schweiss- und Lichtechtheiten sowie einer guten Hartwasserstabilität. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Die erfindungsgemässen Farbstoffmischungen sind gut mit anderen Farbstoffen, insbesondere Dispersionsfarbstoffen kombinierbar. Die erfindungsgemässen Farbstoffmischungen weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 120 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffmischungen in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie das erfindungsgemässe Farbstoffgemisch sie aufweist, so ist es auch möglich Ton-in-Ton-Färbungen zu erhalten.

Mit der Bereitstellung der erfindungsgemässen Farbstoffmischungen kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Farbstoffmischungen eignen sich auch zur Herstellung von wässrigen Tinten für den Tintenstrahldruck (ink-jet printing).

Das folgende Beispiel dient zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 12,5 Teile eines nicht mercerisierten, ungebleichten Baumwollgewebes werden mit einem Teil eines nichtionogenen Netzmittels bei einer Temperatur von 80° eingenetzt. Das Baumwollgewebe wird abgequetscht und in eine 50° warme Farbstofflösung, welche 1,9% einer Mischung der nachstehenden Farbstoffe der Formeln (4) und (6) im Verhältnis von 1:1,3 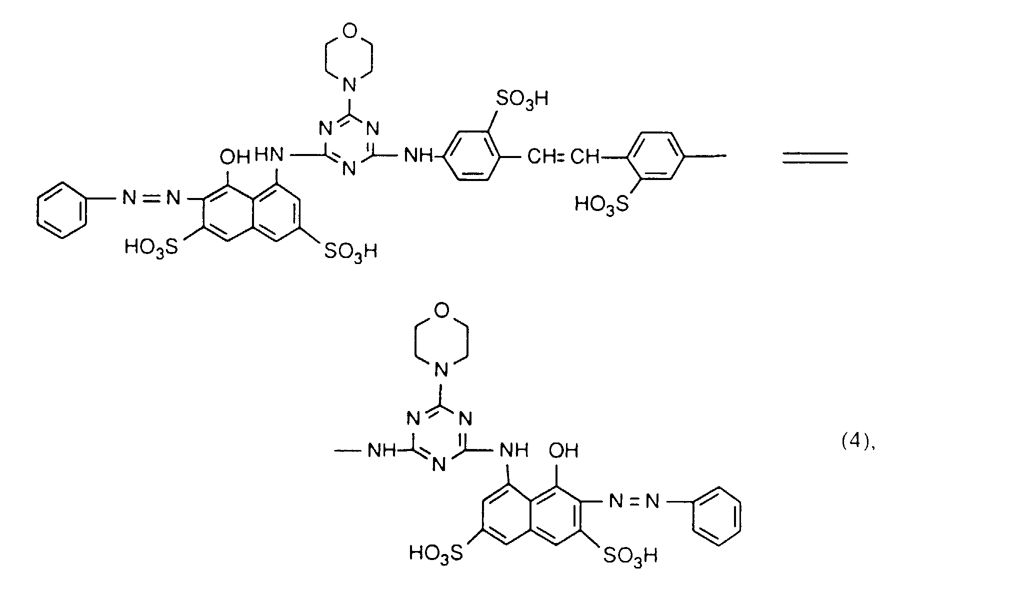 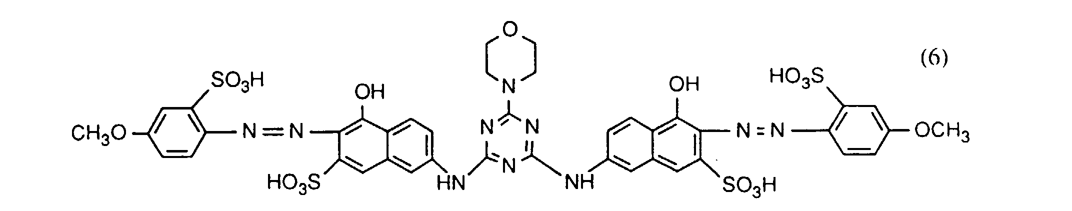 enthält, bei einem Flottenverhältnis von 1:20 eingetragen. Man erhitzt das Färbebad innerhalb von 30 Minuten auf Kochtemperatur, gibt 20 g/l Natriumsulfat in drei Portionen zu und belässt das Färbebad 45 Minuten bei der Kochtemperatur. Anschliessend wird das gefärbte Baumwollgewebe aus dem Bad herausgenommen. Nach Spülung mit kaltem Wasser und Trocknung erhält man ein in einer roten Nuance gefärbtes Baumwollgewebe, welches gute Allgemeinechtheiten aufweist.

Beispiel 2: 250,8 Teile gut eingenetzter Polyester/Baumwolle Maschenware, welche auf 100 Teile 30 Teile Polyester und 70 Teile Baumwolle enthält, werden bei einer Temperatur von 60°C in eine Hochtemperatur-Jetfärbeapparatur gegeben. Das Flottenverhältnis beträgt 1:7. Anschliessend werden dem Färbebad folgende Hilfsmittel zugesetzt:
0,75 g/l eines handelsüblichen Gleitmittels (Oxyalkylen-Polyesterkondensat-Typ),
0,3 g/l eines silikonfreien Penetrationsbeschleunigers auf Maleinsäureesterbasis,
1 g/l eines Egalisierhilfsmittels (Ammoniumsalz eines säuremodifizierten Polyhydroxyalkylenglykoläthers),
2 g/l Mononatriumdihydrogenphosphat-Puffer,
2 g/l Natrium-m-nitrobenzolsulfonat und
10 g/l Natriumsulfat.

Nun wird der pH mit Essigsäure auf einen Wert von 5 gestellt. Die Färbeflotte wird 5 Minuten bei einer Temperatur von 60°C belassen und anschliessend wird eine Farbstoffmischung, die 0,9 Teile einer Mischung der Farbstoffe der Formeln (4) und (6) im Verhältnis von 1:1,3 und 0,3 Teile des Dispersionsfarbstoffes der Formel 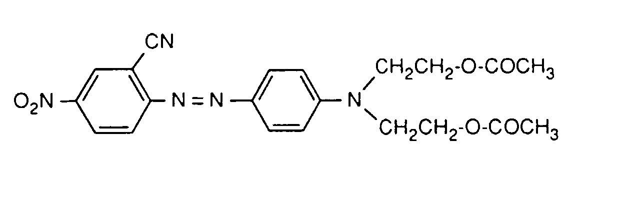 enthält, dem Färbebad zugegeben. Dann wird das Färbebad mit einer Aufheizrate von 2°C/Minute auf eine Temperatur von 130°C erhitzt, diese Temperatur 30 Minuten gehalten und anschliessend wird mit einer Abkühlrate von 1,5°C/Minute auf eine Temperatur von 80°C abgekühlt. Das Färbebad wird 15 Minuten bei der Temperatur von 80°C belasssen. Nun wird das Färbebad abgelassen und das gefärbte Material zweimal je 5 Minuten mit 30°C warmem Wasser gewaschen. Zur Fertigstellung der Färbung wird das Färbegut in üblicher Weise getrocknet. Das erhaltene Färbegut weist eine rote Färbung auf.

## Patentansprüche

1. Farbstoffmischung, dadurch gekennzeichnet, dass sie mindestens einen Farbstoff der Formel 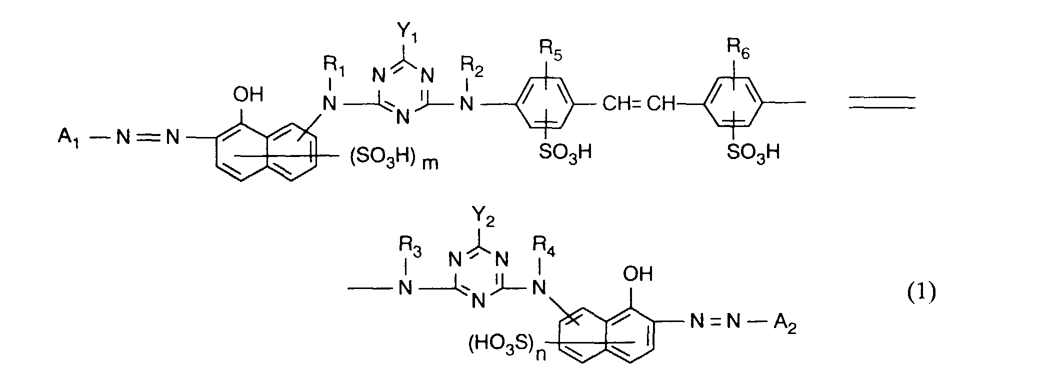 und mindestens einen Farbstoff der Formel 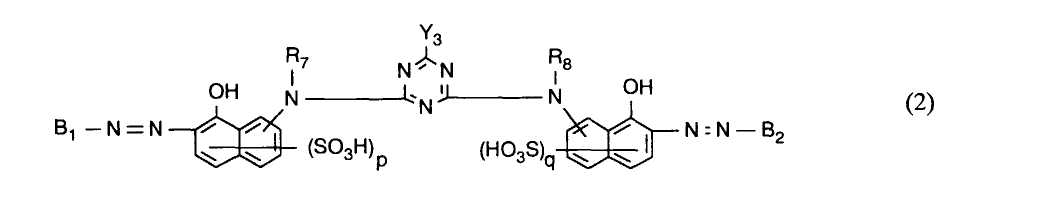 enthält, worin A₁, A₂, B₁ und B₂ unabhängig voneinander gegebenenfalls substituiertes Phenyl oder Naphthyl, R₁, R₂, R₃, R₄, R₇ und R₈ unabhängig voneinander Wasserstoff oder gegebenenfalls substituiertes C₁-C₈-Alkyl, R₅ und R₆ unabhängig voneinander Wasserstoff, gegebenenfalls substituiertes C₁-C₈-Alkyl, oder C₁-C₈-Alkoxy, Halogen, Hydroxy, Carboxy oder Sulfo, Y₁, und Y₂ Morpholino, Y₃ Halogen, Amino, gegebenenfalls im Alkylteil substituiertes N-Mono- oder N,N-Di-C₁-C₄-Alkylamino oder Morpholino ist und m, n, p und q unabhängig voneinander die Zahl 1 oder 2 bedeuten.

2. Farbstoffmischung gemäss Anspruch 1, dadurch gekennzeichnet, dass A₁ und A₂ im Farbstoff der Formel (1) und B₁ und B₂ im Farbstoff der Formel (2) gegebenenfalls durch C₁-C₄-Alkyl, C₁-C₄-Alkoxy, Halogen, Hydroxy, Carboxy oder Sulfo, insbesondere gegebenenfalls durch C₁-C₄-Alkoxy oder Sulfo, substituiertes Phenyl sind.

3. Farbstoffmischung gemäss einem der Ansprüche 1 und 2, dadurch gekennzeichnet, dass R₁, R₂, R₃ und R₄ im Farbstoff der Formel (1) und R₇ und R₈ im Farbstoff der Formel (2) Wasserstoff oder C₁-C₄-Alkyl, insbesondere Wasserstoff. sind.

4. Farbstoffmischung gemäss einem der Ansprüche 1 bis 3, dadurch gekennzeichnet, dass Y₃ im Farbstoff der Formel (2) Morpholino ist.

5. Farbstoffmischung gemäss einem der Ansprüche 1 bis 4, dadurch gekennzeichnet, dass R₅ und R₆ im Farbstoff der Formel (1) Wasserstoff sind.

6. Farbstoffmischung gemäss einem der Ansprüche 1 bis 5, dadurch gekennzeichnet, dass m und n im Farbstoff der Formel (1) je die Zahl 2 bedeuten.

7. Farbstoffmischung gemäss einem der Ansprüche 1 bis 6, dadurch gekennzeichnet, dass p und q im Farbstoff der Formel (2) je die Zahl 1 bedeuten.

8. Farbstoffmischung gemäss Anspruch 1, dadurch gekennzeichnet, dass sie einen Farbstoff der Formel (1) und einen Farbstoff der Formel (2) enthält, worin A₁, A₂, B₁ und B₂ gegebenenfalls durch C₁-C₄-Alkyl, C₁-C₄-Alkoxy, Halogen, Hydroxy, Carboxy oder Sulfo substituiertes Phenyl, R₁, R₂, R₃, R₄, R₅, R₆, R₇ und R₈ Wasserstoff, Y₁, Y₂ und Y₃ Morpholino, m und n je die Zahl 2 und p und q je die Zahl 1 bedeuten.

9. Farbstoffmischung gemäss Anspruch 8, dadurch gekennzeichnet, dass sie als Farbstoff der Formel (1) einen Farbstoff der Formel 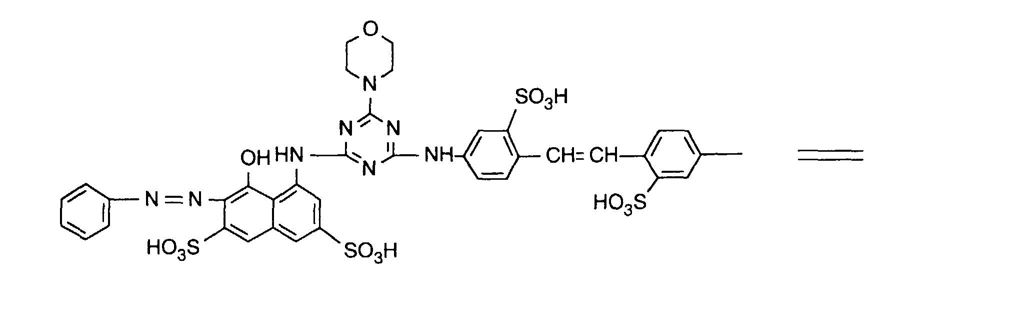 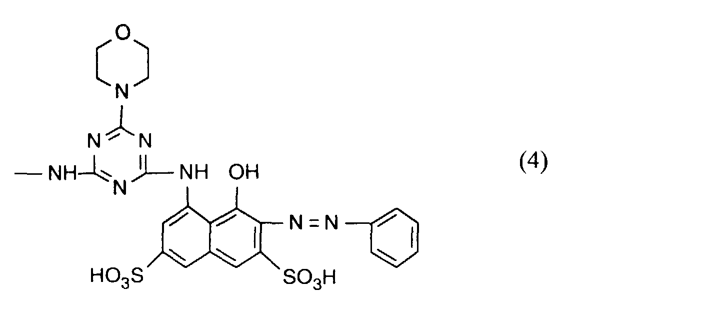 und als Farbstoff der Formel (2) einen Farbstoff der Formel 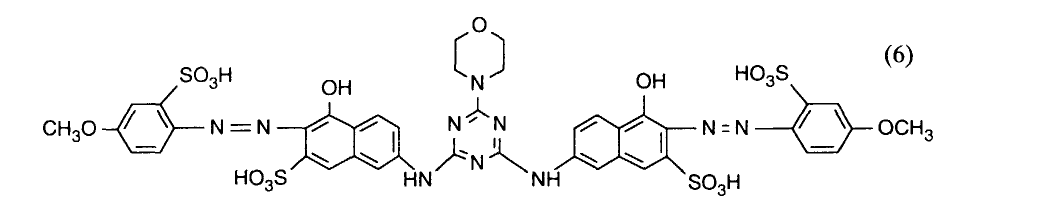 enthält.

10. Farbstoffmischung gemäss einem der Ansprüche 1 bis 9, dadurch gekennzeichnet, dass das Verhältnis der Farbstoffe der Formeln (1) und (2) 95:5 bis 5:95, insbesondere 80:20 bis 20:80, vorzugsweise 60:40 bis 40:60 ist.

11. Verfahren zum Färben oder Bedrucken von stickstoffhaltigen und hydroxylgruppenhaltigen Fasermaterialien mit Farbstoffmischungen, dadurch gekennzeichnet, dass man eine Farbstoffmischung gemäss einem der Ansprüche 1 bis 10 verwendet.

12. Verfahren gemäss Anspruch 11, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasem unter den Färbebedingungen für Polyesterfasern färbt.

13. Verfahren gemäss einem der Ansprüche 11 und 12, dadurch gekennzeichnet, dass man Polyester/Baumwoll-Mischgewebe in einem einstufigen, einbadigen Verfahren färbt, wobei man neben einer Farbstoffmischung gemäss einem der Ansprüche 1 bis 10 einen Dispersionsfarbstoff verwendet und aus wässriger Flotte bei Temperaturen im Bereich von 100 bis 150°C, vorzugsweise 120 bis 130°C, und einem pH-Wert zwischen 4 und 7,5 färbt.

## Claims

1. A dye mixture which comprises at least one dye of formula 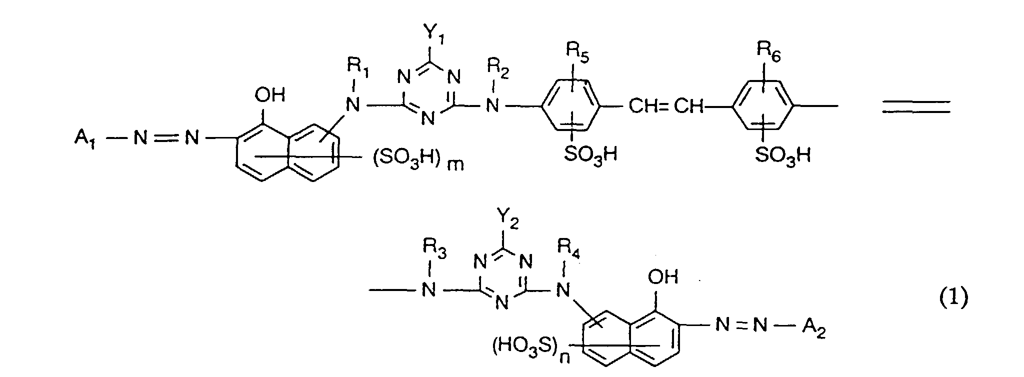 and at least one dye of formula 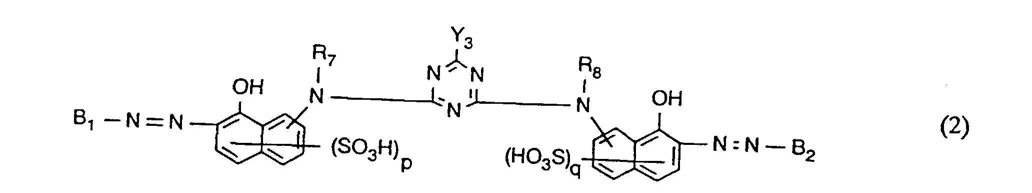 wherein A₁, A₂, B₁ and B₂ are each independently of one another unsubstituted or substituted phenyl or naphthyl, R₁, R₂, R₃, R₄, R₇ and R₈ are each independently of one another hydrogen or unsubstituted or substituted C₁-C₈alkyl, R₅ and R₆ are each independently of the other hydrogen, unsubstituted or substituted C₁-C₈alkyl, or are C₁-C₈alkoxy, halogen, hydroxy, carboxy or sulfo, Y₁ and Y₂ are morpholino, Y₃ is halogen, amino, N-mono- or N,N-di-C₁-C₄alkylamino which are unsubstituted or substituted in the alkyl moiety or is morpholino, and m, n, p and q are each independently of one another 1 or 2.

2. A dye mixture according to claim 1, wherein A₁ and A₂ in the dye of formula (1) and B₁ and B₂ in the dye of formula (2) are phenyl or phenyl which is substituted by C₁-C₄alkyl, C₁-C₄alkoxy, halogen, hydroxy, carboxy or sulfo, especially unsubstituted or C₁-C₄alkoxy- or sulfo-substituted phenyl.

3. A dye mixture according to either of claims 1 and 2, wherein R₁, R₂, R₃ and R₄ in the dye of formula (1) and R₇ and R₈ in the dye of formula (2) are hydrogen or C₁-C₄alkyl, especially hydrogen.

4. A dye mixture according to any one of claims 1 to 3, wherein Y₃ in the dye of formula (2) is morpholino.

5. A dye mixture according to any one of claims 1 to 4, wherein R₅ and R₆ in the dye of formula (1) are hydrogen.

6. A dye mixture according to any one of claims 1 to 5, wherein m and n in the dye of formula (1) are each 2.

7. A dye mixture according to any one of claims 1 to 6, wherein p and q in the dye of formula (2) are each 1.

8. A dye mixture according to claim 1, which contains a dye of formula (1) and a dye of formula (2), wherein A₁, A₂, B₁ and B₂ are phenyl or phenyl which is substituted by C₁-C₄alkyl, C₁-C₄alkoxy, halogen, hydroxy, carboxy or sulfo, R₁, R₂, R₃, R₄, R₅, R₆, R₇ and R₈ are hydrogen, Y₁, Y₂ and Y₃ are morpholino, m and n are each 2 and p and q are each 1.

9. A dye mixture according to claim 8, which contains a dye of formula 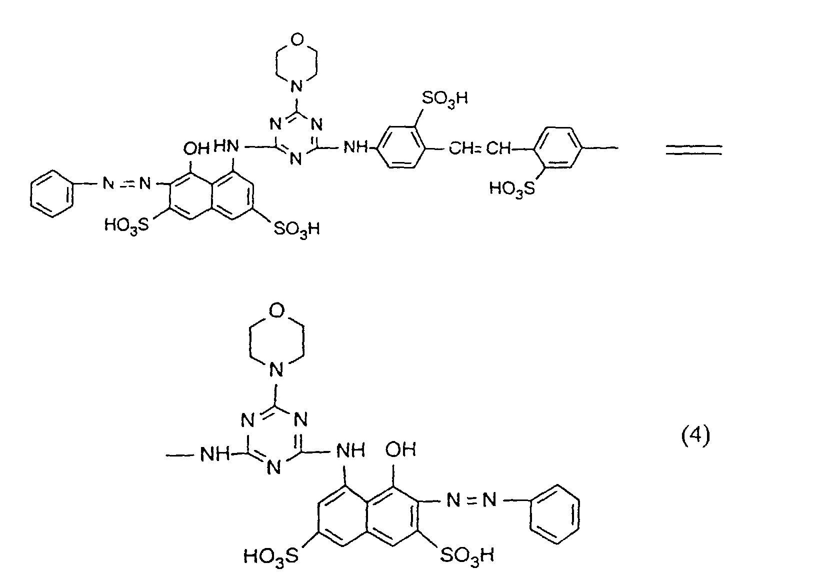 as dye of formula (1), and a dye of formula 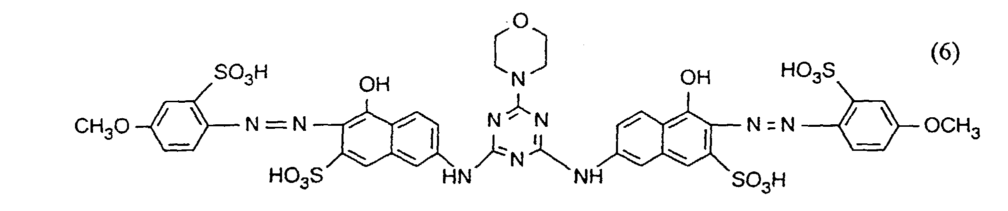 as dye of formula (2).

10. A dye mixture according to any one of claims 1 to 9, wherein the ratio of dye of formula (1) to dye of formula (2) is from 95:5 to 5:95, more particularly from 80:20 to 20:80, preferably from 60:40 to 40:60.

11. A process for the dyeing or printing of nitrogen-containing and hydroxyl-containing fibre materials with dye mixtures, wherein a dye mixture according to any one of claims 1 to 10 is used.

12. A process according to claim 11, which comprises dyeing blends of synthetic fibres and cellulosic fibre materials, especially polyester/cotton blends, in the presence of a disperse dye for the polyester fibres under the dyeing conditions for polyester fibres.

13. A process according to either of claims 11 and 12, which comprises dyeing polyester/cotton blends in a single-step, one-bath process using, in addition to a dye mixture according to any one of claims 1 to 10, a disperse dye, and carrying out dyeing from an aqueous liquor at temperatures in the range from 100 to 150°C, preferably from 120 to 130°C, and at a pH between 4 and 7.5.

## Revendications

1. Mélange de colorants caractérisé en ce qu'il contient au moins un colorant de formule 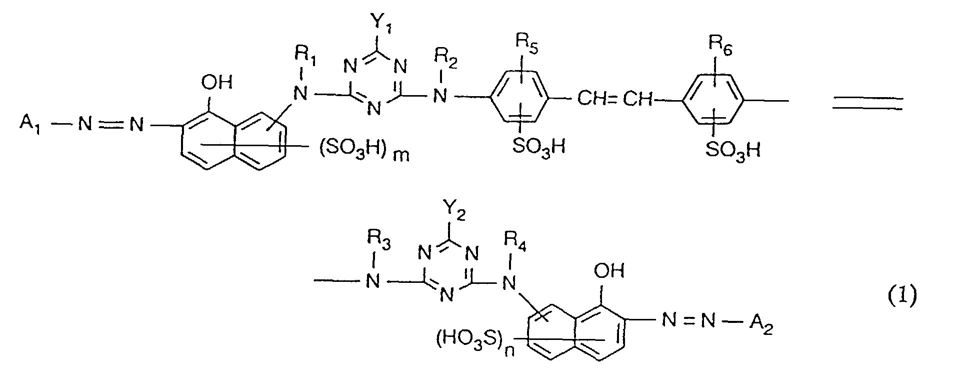 et au moins un colorant de formule 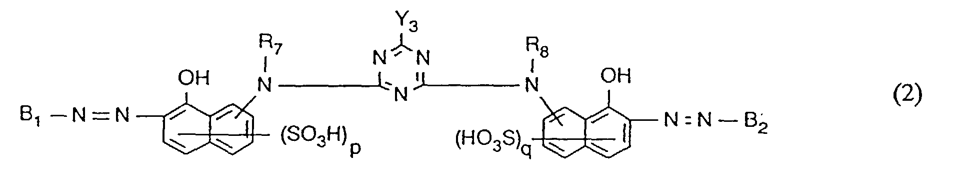 où A₁, A₂, B₁ et B₂ représentent, indépendamment l'un de l'autre, un groupe phényle ou naphtyle éventuellement substitué, R₁, R₂, R₃, R₄, R₇ et R₈ représentent, indépendamment l'un de l'autre, un atome d'hydrogène ou un groupe alkyle en C₁₋₈ éventuellement substitué, R₅ et R₆ représentent, indépendamment l'un de l'autre, un atome d'hydrogène, un groupe alkyle en C₁₋₈ éventuellement substitué, un groupe alcoxy en C₁₋₈, halogéno, hydroxy, carboxy ou sulfo, Y₁ et Y₂ représentent un groupe morpholino, Y₃ un atome d'halogène, un groupe amino, un résidu N-mono- ou N,N-di-(alkyle en C₁₋₄)-amino ou un groupe morpholino, et m, n, p et q valent, indépendamment l'un de l'autre, 1 ou 2.

2. Mélange de colorants conforme à la revendication 1, caractérisé en ce que A₁ et A₂ dans le colorant de formule (1) ou B₁ et B₂ dans le colorant de formule (2), représentent un résidu phényle pouvant porter un substituant alkyle en C₁₋₄, alcoxy en C₁₋₄, halogéno, hydroxy, carboxy ou sulfo, en particulier un résidu alcoxy en C₁₋₄ ou sulfo.

3. Mélange de colorants conforme à une des revendications 1 et 2, caractérisé en ce que R₁, R₂, R₃ et R₄ dans le colorant de formule (1) et R₇ et R₈ dans le colorant de formule (2) représentent un atome d'hydrogène ou un groupe alkyle en C₁₋₄, en particulier un atome d'hydrogène.

4. Mélange de colorants conforme à une des revendications 1 à 3, caractérisé en ce que Y₃ dans le colorant de formule (2) est un groupe morpholino.

5. Mélange de colorants conforme à une des revendications 1 à 4, caractérisé en ce que R₅ et R₆ dans le colorant de formule (1) représentent un atome d'hydrogène.

6. Mélange de colorants conforme à une des revendications 1 à 5, caractérisé en ce que m et n dans le colorant de formule (1) valent chacun 2.

7. Mélange de colorants conforme à une des revendications 1 à 6, caractérisé en ce que p et q dans le colorant de formule (2) valent chacun 1.

8. Mélange de colorants conforme à la revendication 1, caractérisé en ce qu'il contient un colorant de formule (1) et un colorant de formule (2) dans lesquels A₁, A₂, B₁ et B₂ représentent un groupe phényle éventuellement substitué par un groupe alkyle en C₁₋₄, alcoxy en C₁₋₄, halogéno, hydroxy, carboxy ou sulfo, R₁, R₂, R₃, R₄, R₅, R₆, R₇ et R₈ représentent un atome d'hydrogène, Y₁, Y₂ et Y₃ un résidu morpholino, m et n valent chacun 2 et p et q sont chacun égal à 1.

9. Mélange de colorants conforme à la revendication 8, caractérisé en ce qu'il contient, comme colorant de formule (1), un colorant de formule 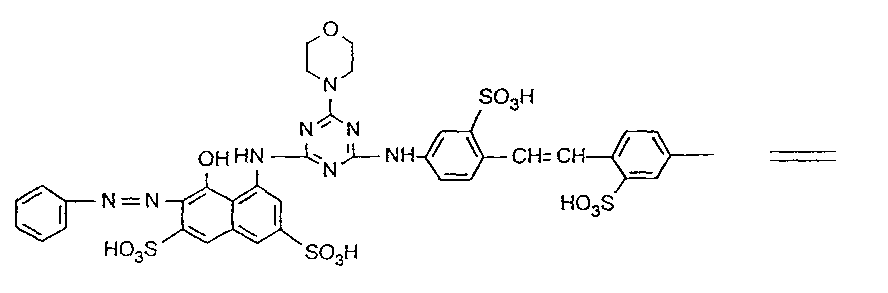 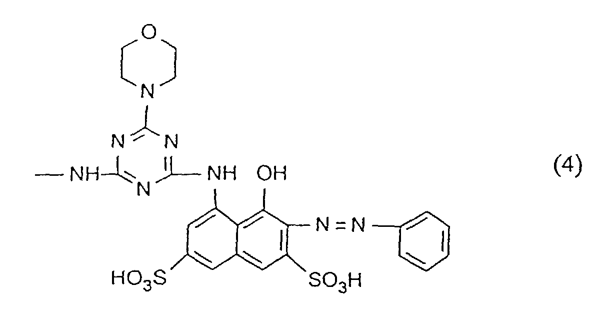 et comme colorant de formule (2), un colorant de formule

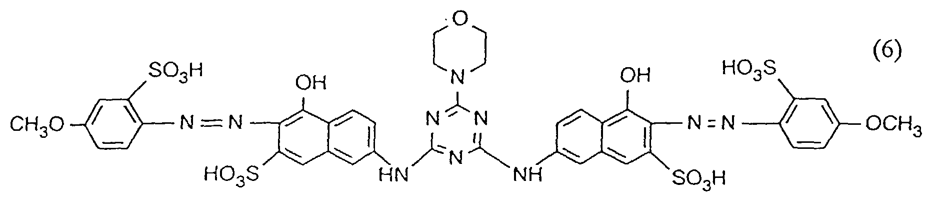

10. Mélange de colorants conforme à une des revendications 1 à 9, caractérisé en ce que le rapport des colorants de formule (1) et (2) est compris entre 95/5 et 5/95, en particulier entre 80/20 et 20/80, et de préférence entre 60/40 et 40/60.

11. Procédé pour la teinture ou l'impression de matériaux fibreux contenant des atomes d'azote ou des groupes hydroxyle, caractérisé en ce que l'on utilise un mélange de colorants conforme à une des revendications 1 à 10.

12. Procédé conforme à la revendication 11, caractérisé en ce que l'on teint des mélanges de fibres contenant des fibres synthétiques et des matériaux fibreux cellulosiques, en particulier des tissus mixtes polyester/coton, en présence d'un colorant de dispersion pour les fibres de polyester dans les conditions de teinture des fibres de polyester.

13. Procédé conforme à une des revendications 11 et 12, caractérisé en ce que l'on teint des tissus mixtes polyester/coton en un procédé à bain unique et étape unique, en utilisant, en plus d'un mélange de colorants conforme à une des revendications 1 à 10, un colorant de dispersion et en ce que l'on effectue la teinture dans un bain aqueux à des températures comprises entre 100 et 150 °C, de préférence entre 120 et 130 °C, et à une valeur de pH comprise entre 4 et 7,5.
